# FASCICULE DE BREVET EUROPEEN

(11) **EP 2 931 444 B1**
(45) Date de publication et mention de la délivrance du brevet: **19.04.2017**
(21) Numéro de dépôt: 13821894.6
(22) Date de dépôt: 27.12.2013
(51) Int. Cl.: B09B 3/00, B60K 15/03

(54) **DISPOSITIF D'ASPIRATION DE CARBURANT**
BRENNSTOFFANSAUGVORRICHTUNG
FUEL SUCTION DEVICE

(30) Priorité: 31.12.2012 FR 1262979
(43) Date de publication de la demande: 21.10.2015
(73) Titulaire: ISAP, 34740 Vendargues (FR)
(72) Inventeur: PELLETIER, Nathalie, 34740 Vendargues (FR); LAATEB, Claude, 34740 Vendargues (FR)
(74) Mandataire: Cornuejols, Georges
(86) Numéro de dépôt international: PCT/FR2013/053270
(87) Numéro de publication internationale: WO 2014/102510

(56) Documents cités:
- EP-A1- 0 709 147
- DE-A1- 4 404 882
- US-A- 4 295 504

## Description

### DOMAINE TECHNIQUE DE L'INVENTION

La présente invention vise un dispositif d'aspiration de carburant. Elle s'applique notamment à la récupération de carburant de réservoir de véhicule.

### ETAT DE LA TECHNIQUE

Pour le reste de ce document, on définira un « composé organique volatil » comme un composé d'hydrogène et de carbone fréquemment sous forme gazeuse dans l'atmosphère. Ces composés sont généralement présents à proximité d'un carburant, et en particulier dans les réservoirs de carburant.

Les composés organiques volatils, ou « COV », sont reconnus comme une source de danger pour la santé, nombre d'entre eux étant cancérigènes une fois inhalés par l'organisme. Ce risque pour la santé est d'autant plus grand quand l'exposition aux composés organiques volatils est de longue durée. De fait, les opérateurs chargés de récupérer le carburant contenu dans des réservoirs de nombreux véhicules sont particulièrement exposés aux risques pour la santé que causent les composés organiques volatiles. Le document EP 0 709 147 A1 décrit un dispositif selon le préambule de la revendication 1.

Dans les systèmes actuels, la récupération du carburant contenu dans un réservoir de véhicule est réalisée par insertion dans le réservoir d'un tuyau relié à une pompe située à proximité de l'opérateur réalisant l'opération. Une fois le réservoir ouvert, des composés organiques volatils s'échappent de celui-ci durant toute la durée de l'opération, au risque d'être inhalés par un opérateur à proximité. Une fois l'aspiration de carburant terminée et le tuyau inséré retiré du réservoir, ce tuyau continue de goutter et ainsi de relâcher dans l'air ambiant des composés organiques volatils. Finalement, les systèmes actuels effectuent à la base la pompe, située à proximité de l'opérateur, un tri entre les vapeurs et les liquides aspirées et ne conservent que les liquides (le carburant) en relâchant les vapeurs à la base de la pompe.

Enfin, lors des manipulations du tuyau, la peau des mains de l'opérateur risque d'être en contact avec le carburant, ce qui peut provoquer des irritations, voire, à force, une dégradation de la peau.

Ainsi, les systèmes actuels ne permettent pas une protection optimisée contre les risques pour la santé liés à la récupération de carburant.

### OBJET DE L'INVENTION

La présente invention vise à remédier à tout ou partie de ces inconvénients.

A cet effet, selon un premier aspect, la présente invention vise un dispositif d'aspiration de carburant comportant un moyen d'aspiration du carburant à travers une ouverture d'un réservoir qui comporte, en outre :
- au moins un moyen d'aspiration de vapeurs et
- un moyen de positionnement d'au moins un moyen d'aspiration de vapeurs à proximité de l'ouverture dudit réservoir.

Ce dispositif permet d'aspirer les vapeurs qui peuvent s'échapper d'un réservoir d'un véhicule pendant que le carburant contenu dans ce réservoir est récupéré par une personne. De plus, la présence d'un moyen de positionnement d'au moins un moyen d'aspiration de vapeurs permet un positionnement optimal pour capter un maximum de vapeurs toxiques et protéger les personnes réalisant une récupération de carburant de ces vapeurs.

Dans des modes de réalisation, le moyen d'aspiration de vapeurs du dispositif objet de la présente invention comporte une cloche de confinement.

Ces modes de réalisation ont l'avantage de permettre une protection améliorée des personnes à proximité d'une ouverture de réservoir en limitant les vapeurs relâchées par le réservoir à un volume confiné.

Dans des modes de réalisation, le moyen d'aspiration de vapeurs du dispositif objet de la présente invention comporte un tuyau creux configuré pour permettre le passage de vapeurs et muni d'ouvertures d'aspiration entourant au moins partiellement l'ouverture du réservoir.

Ces modes de réalisation permettent d'aspirer les vapeurs quittant l'ouverture d'un réservoir selon une pluralité de directions et ainsi d'optimiser la protection de tiers à proximité de l'ouverture dudit réservoir.

Dans des modes de réalisation, le moyen de positionnement est un bras télescopique portant au moins un moyen d'aspiration de vapeurs.

Ces modes de réalisation ont l'avantage de permettre à une personne réalisant une récupération de carburant dans un réservoir d'effectuer le positionnement du moyen d'aspiration à distance, de manière à limiter son exposition aux vapeurs pouvant quitter l'ouverture du réservoir. De plus, ces modes de réalisation permettent un maintien plus stable d'au moins un moyen d'aspiration tout au long du processus de récupération de carburant. Finalement, ces modes de réalisation ne nécessitent, une fois positionnés, aucune action de la part d'une personne pour assurer le maintien du positionnement d'un moyen d'aspiration.

Dans des modes de réalisation, le dispositif objet de la présente invention comporte :
- une cuve déportée d'au moins un moyen d'aspiration configurée pour recevoir du carburant et des vapeurs par l'intermédiaire du moyen d'aspiration de vapeurs et
- un moyen d'évacuation de vapeurs déporté de la cuve des vapeurs reçues.

L'avantage de ces modes de réalisation est qu'ils permettent d'évacuer les vapeurs aspirées à une distance choisie du lieu d'aspiration. Ainsi, ces modes de réalisation permettent la récupération de carburant et la protection des risques sur la santé des personnes réalisant cette récupération.

Dans des modes de réalisation, le dispositif objet de la présente invention comporte au moins un moyen de récupération de carburant aspiré par un moyen d'aspiration de vapeurs.

Ces modes de réalisation ont l'avantage d'optimiser la quantité de carburant récupéré.

Dans des modes de réalisation, le tuyau est un tuyau flexible souple et creux, le dispositif objet de la présente invention comportant :
- une gaine externe enveloppant au moins une partie du tuyau flexible souple et
- entre la gaine externe et le tuyau flexible, un moyen d'essuyage du tuyau flexible souple.

Ces modes de réalisation ont l'avantage de permettre de limiter la quantité de vapeurs émises par des résidus de carburant se trouvant sur le tuyau flexible lors de la rétractation du tuyau flexible hors d'un réservoir.

Dans des modes de réalisation, le moyen d'essuyage est un anneau souple.

Ces modes de réalisation ont l'avantage de permettre d'évacuer le carburant présent sur la surface du tuyau flexible.

Dans des modes de réalisation, la gaine externe est télescopique.

L'avantage de ces modes de réalisation est qu'ils permettent à la gaine externe d'occuper moins d'espace lorsqu'elle est rétractée.

Dans des modes de réalisation, le dispositif objet de la présente invention comporte un bras télescopique portant la gaine externe.

Ces modes de réalisation ont l'avantage de permettre à une personne réalisant une récupération de carburant dans un réservoir d'effectuer le positionnement du moyen d'aspiration de carburant à distance, de manière à limiter son exposition aux vapeurs pouvant quitter l'ouverture du réservoir. De plus, ces modes de réalisation permettent un maintien plus stable d'au moins un moyen d'aspiration de carburant tout au long du processus de récupération de carburant. Finalement, ces modes de réalisation ne nécessitent, une fois positionnés, aucune action de la part d'une personne pour assurer le maintien du positionnement d'un moyen d'aspiration de carburant.

Selon un deuxième aspect, la présente invention vise un dispositif selon la revendication 11.

Ce dispositif a l'avantage d'interdire le contact entre la peau de l'opérateur et le carburant. De plus, ce dispositif permet de limiter la quantité de vapeurs émises par des résidus de carburant se trouvant sur le tuyau flexible lors de la rétractation du tuyau flexible hors d'un réservoir.

Dans des modes de réalisation, le moyen d'essuyage est un anneau souple.

Ces modes de réalisation ont l'avantage de permettre d'évacuer le carburant présent sur la surface du tuyau flexible.

Dans des modes de réalisation, le moyen d'essuyage est en matière absorbante.

L'avantage de ces modes de réalisation est qu'ils permettent de limiter l'égouttement de carburant présent sur la surface du tuyau flexible.

Dans des modes de réalisation, la gaine externe est télescopique.

L'avantage de ces modes de réalisation est qu'ils permettent à la gaine externe d'occuper moins d'espace lorsqu'elle est rétractée.

Dans des modes de réalisation, le dispositif objet de la présente invention comporte un bras télescopique portant la gaine externe.

Ces modes de réalisation ont l'avantage de permettre à une personne réalisant une récupération de carburant dans un réservoir d'effectuer le positionnement du moyen d'aspiration de carburant à distance, de manière à limiter son exposition aux vapeurs pouvant quitter l'ouverture du réservoir. De plus, ces modes de réalisation permettent un maintien plus stable d'au moins un moyen d'aspiration de carburant tout au long du processus de récupération de carburant. Finalement, ces modes de réalisation ne nécessitent, une fois positionnés, aucune action de la part d'une personne pour assurer le maintien du positionnement d'un moyen d'aspiration de carburant.

Dans des modes de réalisation, le déploiement du bras télescopique provoque la rétractation du tuyau flexible creux à l'intérieur de la gaine externe.

L'avantage de ces modes de réalisation est de permettre à une personne réalisant une aspiration de carburant d'extraire et d'essuyer un flexible d'un réservoir à distance de l'ouverture du réservoir. Ainsi, la personne réalisant cette aspiration de carburant est moins exposée aux vapeurs, tels des composés organiques volatils, émanant de l'ouverture du réservoir.

Dans des modes de réalisation, le dispositif objet de la présente invention comporte un moyen de déploiement du tuyau flexible.

Ces modes de réalisation présentent l'avantage de permettre à un tuyau flexible d'atteindre de façon optimisée le carburant présent dans un réservoir.

Dans des modes de réalisation, le dispositif objet de la présente invention comporte, en outre :
- au moins un moyen d'aspiration de vapeurs et
- un moyen de positionnement d'au moins un moyen d'aspiration de vapeurs autour de l'ouverture dudit réservoir.

Ces modes de réalisation permettent d'aspirer les vapeurs qui peuvent s'échapper d'un réservoir d'un véhicule pendant que le carburant contenu dans ce réservoir est récupéré par une personne. De plus, la présence d'un moyen de positionnement d'au moins un moyen d'aspiration de vapeurs permet un positionnement optimal pour capter un maximum de vapeurs toxiques et protéger les personnes réalisant une récupération de carburant de ces vapeurs.

Dans des modes de réalisation, le moyen d'aspiration de vapeurs comporte une cloche de confinement.

Ces modes de réalisation ont l'avantage de permettre une protection améliorée des personnes à proximité d'une ouverture de réservoir en limitant les vapeurs relâchées par le réservoir à un volume confiné.

Dans des modes de réalisation, le dispositif objet de la présente invention comporte :
- une cuve déportée d'au moins un moyen d'aspiration configurée pour recevoir du carburant et des vapeurs et
- un moyen d'évacuation de vapeurs déporté de la cuve des vapeurs reçues.

L'avantage de ces modes de réalisation est qu'ils permettent d'évacuer les vapeurs aspirées à une distance choisie du lieu d'aspiration. Ainsi, ces modes de réalisation permettent la récupération de carburant et la protection des risques sur la santé des personnes réalisant cette récupération.

### BREVE DESCRIPTION DES FIGURES

D'autres avantages, buts et caractéristiques de l'invention ressortiront de la description qui suit d'au moins un mode de réalisation particulier du dispositif d'aspiration de carburant, en regard des dessins annexés, dans lesquels :
- la figure 1 représente, schématiquement et en coupe, une première partie d'un mode particulier de réalisation dans lequel le tuyau flexible est déployé,
- la figure 2 représente, schématiquement et en coupe, la première partie d'un mode particulier de réalisation dans lequel le tuyau flexible est rétracté,
- la figure 3 représente, schématiquement et en coupe, une deuxième partie d'un mode particulier de réalisation du dispositif objet de la présente invention,
- la figure 4 représente, schématiquement et en perspective, une troisième partie d'un mode particulier de réalisation du dispositif objet de la présente invention,
- la figure 5 représente, schématiquement et en perspective, une quatrième partie d'un mode particulier de réalisation,
- la figure 6 représente, schématiquement et en coupe, une cinquième partie d'un mode particulier de réalisation du dispositif objet de la présente invention,
- la figure 7 représente, schématiquement et en perspective, un mode de réalisation particulier d'un moyen d'aspiration de vapeurs et
- la figure 8 représente, schématiquement et en coupe, un mode de réalisation particulier.

### DESCRIPTION D'EXEMPLES DE REALISATION DE L'INVENTION

La présente description est donnée à titre non limitatif.

On note, dès à présent, que les figures ne sont pas à l'échelle.

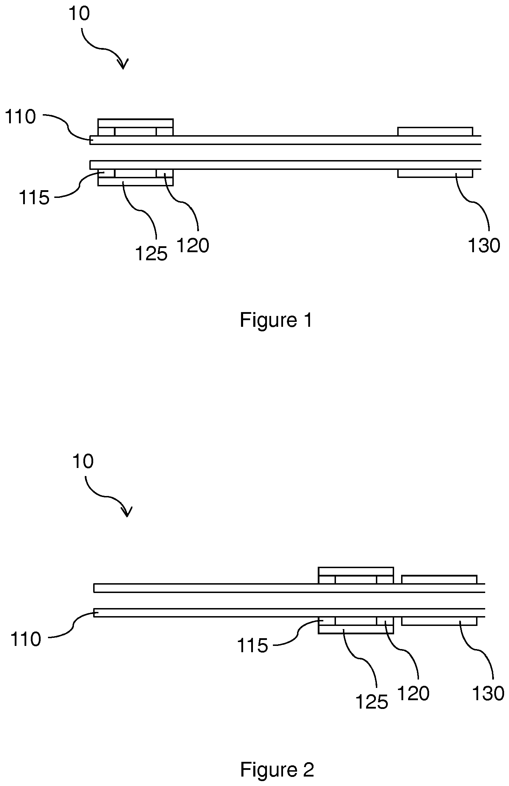

On observe, sur la figure 1, une première partie d'un mode de réalisation particulier 10.

Ce dispositif 10 d'aspiration de carburant comporte :
- un tuyau 110 flexible creux et souple configuré pour permettre le passage du carburant depuis le réservoir de carburant d'un véhicule jusqu'à une cuve,
- un pistolet 125 que l'opérateur décroche de la pompe à carburant et positionne en regard de la trappe à carburant du véhicule, ce pistolet entourant le tuyau flexible 110 et
- une poignée 130 de manipulation du tuyau flexible 110 solidaire du tuyau flexible 110.

Le pistolet 125 est séparé du tuyau flexible 110 par deux moyens d'essuyage 115 et 120 du tuyau 110 flexible souple. Ces moyens d'essuyage 115 et 120 sont solidaires du pistolet 125.

Le tuyau 110 flexible creux et souple est configuré pour entrer dans le réservoir d'un véhicule et est connecté à un moyen d'aspiration de carburant. Dans la figure 1, ce tuyau 110 flexible n'est pas déployé pour réaliser une aspiration de carburant présent dans un réservoir de véhicule.

En tenant d'une main la poignée 130 et, de l'autre, le pistolet 125, l'opérateur peut les rapprocher, ce qui a pour effet de libérer une partie du tuyau flexible 110 en bout de pistolet 125 comme illustré en figure 2. Une fois l'aspiration du carburant effectuée, l'opérateur écarte la poignée 130 du pistolet 125, ce qui a pour effet de rétracter le tuyau flexible 110.

Les moyens 115 et 120 d'essuyage du tuyau 110 flexible sont, par exemple, deux anneaux semi-rigides en nitrile configurés pour épouser et essuyer la surface du tuyau 110 flexible lorsque celui-ci est rétracté en faisant coulisser le pistolet 125 sur le tuyau flexible 110.

Dans des variantes, les moyens 115 et 120 d'essuyage sont en matière absorbante configurée pour absorber le carburant présent sur la surface du tuyau 110 flexible lorsque celui-ci est rétracté.

Dans des variantes, ce dispositif 10 comporte un moyen de déploiement du tuyau 110 flexible. Ce moyen de déploiement peut être, par exemple, un moteur déroulant le tuyau 110 flexible de manière à déployer, ou rétracter, ce tuyau 110 flexible selon le sens de fonctionnement du moteur.

Afin de réaliser une aspiration de carburant, on déploie le tuyau 110 flexible et creux de manière à ce qu'une extrémité ouverte plonge dans du carburant contenu dans un réservoir de véhicule. Une fois le tuyau 110 flexible et creux immergé, on active le moyen d'aspiration de carburant. Ainsi, le carburant contenu dans le réservoir du véhicule est aspiré par le tuyau 110 et transféré dans une cuve déportée. Une fois l'opération d'aspiration de carburant réalisée, on rétracte le tuyau 110 flexible. Au cours de ce mouvement de rétractation, la surface externe du tuyau 110 flexible est essuyée par les moyens 115 et 120 d'essuyage, de manière à ce que le carburant déposé sur la surface du tuyau 110 flexible s'écoule ou soit absorbé selon les variantes envisagées. Ce dispositif 10 limite donc au maximum les émanations de composés organiques volatils depuis le tuyau 110 flexible et le risque de contact de la peau ou des vêtements de l'opérateur avec du carburant.

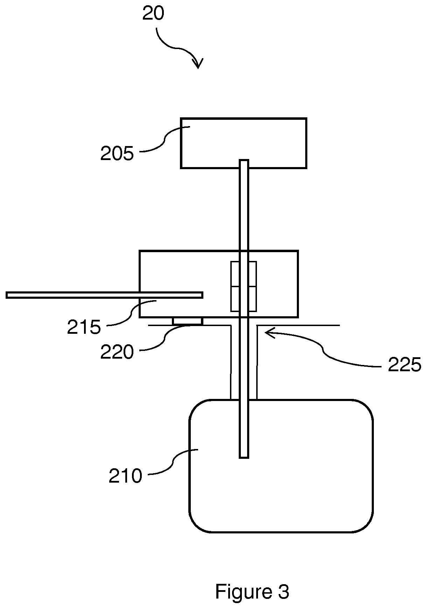

On observe, en figure 3, un mode de réalisation particulier 20 du dispositif objet de la présente invention. Ce dispositif 20 comporte :
- un moyen 205 d'aspiration du carburant à travers une ouverture 225 d'un réservoir 210,
- un moyen 215 d'aspiration de vapeurs et
- un moyen 220 de positionnement du moyen 215 d'aspiration de vapeurs à proximité de l'ouverture 225 du réservoir 210.

Le moyen 205 d'aspiration de carburant peut être, par exemple, une pompe à liquide manuelle ou automatique. Ce moyen 205 d'aspiration peut comporter un tuyau flexible et creux configuré pour entrer dans le réservoir 210 et aspirer le carburant contenu dans le réservoir 210 par une ouverture du tuyau et transporter le carburant aspiré dans une cuve déportée, par exemple.

Le moyen 215 d'aspiration de vapeurs aspire l'air ambiant autour de l'ouverture du réservoir 210. Ce moyen 215 d'aspiration peut être, par exemple, une pompe à vapeurs aspirant l'air ambiant. Le moyen 220 de positionnement peut être, par exemple, une ventouse fixant le moyen 215 d'aspiration de vapeurs à proximité de l'ouverture du réservoir 210 ou un bras articulé formant support.

Dans le premier cas, afin de réaliser l'aspiration de vapeurs, on positionne le moyen 215 d'aspiration de vapeurs en fixant une ventouse située sur la surface du moyen 215 d'aspiration de vapeurs à la carrosserie d'un véhicule dont on cherche à aspirer le carburant contenu dans un réservoir 210. On positionne le moyen 215 d'aspiration de vapeurs à proximité de l'ouverture 225 du réservoir 210. Ainsi, lorsque ce réservoir 210 est ouvert ou qu'une opération d'aspiration de carburant est réalisée par un moyen 205 d'aspiration de carburant, les vapeurs émanant de l'ouverture 225 du réservoir 210 sont aspirées par le moyen 215 d'aspiration de vapeurs. Dans des variantes, le moyen 215 d'aspiration est un soufflet souple configuré pour se fixer sur une ouverture pour carburant du véhicule. Ce soufflet comporte une sortie pour composés organiques volatils sur laquelle un tuyau aspirait l'air autour de l'ouverture à carburant soit fixé et une sortie permettant l'insertion d'un tuyau d'alimentation de carburant.

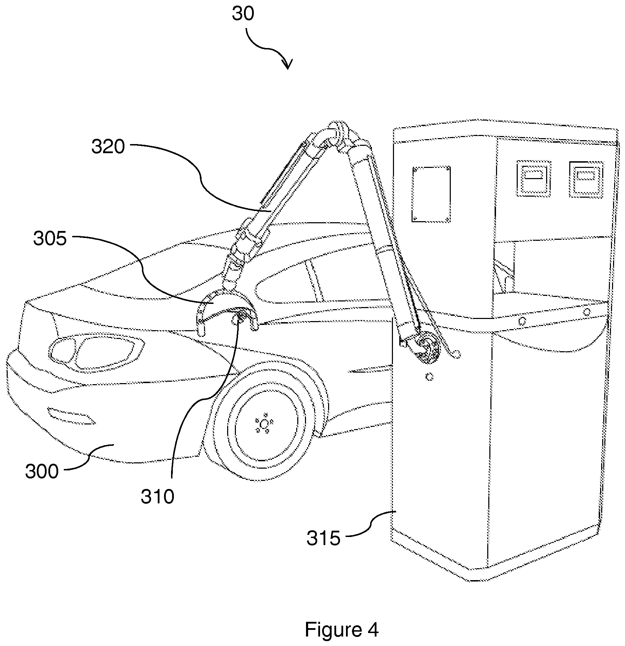

On observe, en figure 4, un mode de réalisation particulier du dispositif 30 objet de la présente invention, en regard d'un véhicule 300. En figure 4 ne sont pas représentés le tuyau flexible, le pistolet et la poignée. Ce dispositif 30 comporte :
- un moyen 315 d'aspiration de vapeurs qui comporte une cloche 305 de confinement et
- un moyen 320 de positionnement du moyen 315 d'aspiration de vapeurs autour de l'ouverture d'un réservoir 310.

En figure 4, le moyen de positionnement 320 est un bras articulé qui porte, d'une part, un tuyau de transport d'air ambiant et composés organiques volatils et, d'autre part, un tuyau de transport du carburant aspiré dans le réservoir du véhicule 300 et la cloche 305 de confinement.

Le moyen 315 d'aspiration peut être, par exemple, une pompe aspirant l'air ambiant et connectée à un tuyau monté sur ce bras articulé 320. Ce moyen 315 d'aspiration comporte une cloche 305 de confinement située à l'ouverture du tuyau monté sur le bras articulé 320. Cette cloche 305 de confinement est également montée sur le bras articulé 320.

Afin de réaliser l'aspiration de vapeurs, on étend le moyen 320 de positionnement de manière à placer la cloche 305 de confinement dans une position où elle entoure au moins partiellement l'ouverture d'un réservoir 310 à carburant du véhicule 300. Une fois le moyen 315 d'aspiration de vapeurs mise en marche, on ouvre le réservoir 310 du véhicule et on positionne le tuyau flexible pour que son extrémité libre atteigne sensiblement le fond du réservoir de carburant du véhicule 300. Les composés organiques volatils étant légers, ceux-ci peuvent rester en suspension dans, ou quitter le réservoir 310 du véhicule au cours de l'aspiration de carburant du réservoir 310. Les composés organiques volatils émanant de l'ouverture du réservoir 310 sont confinés dans une zone étroite autour de l'ouverture du réservoir 310 et aspirés par une ouverture d'un tuyau dont une extrémité est située à l'apex de la cloche 305 de confinement et dont l'autre extrémité est connectée à la pompe à vapeurs.

Dans des variantes, le dispositif 30 comporte un moyen d'aspiration de vapeurs secondaire, non représenté, positionné au sol à proximité d'une borne comportant le moyen 315 d'aspiration. Ce moyen d'aspiration de vapeurs secondaire est, par exemple, une pompe configurée pour aspirer l'air ambiant autour d'ouvertures positionnées au sol. Ces ouvertures peuvent être positionnées selon une zone délimitant l'emplacement habituel d'une entrée pour carburant de véhicules positionnés à proximité de la borne. Dans des variantes, ces ouvertures sont positionnées dans une zone délimitée par la longueur du moyen 320 de positionnement. Dans d'autres variantes, la densité d'ouvertures dans la zone est déterminée par la probabilité de positionnement de l'entrée de carburant de véhicules en regard d'un lieu de la zone. Cette probabilité peut être déterminée, par l'homme du métier, par une étude empirique du positionnement d'un nombre de véhicules significatif sur une zone de test. Dans des variantes, ce moyen d'aspiration secondaire est positionné à la base d'une borne comportant le dispositif 10.

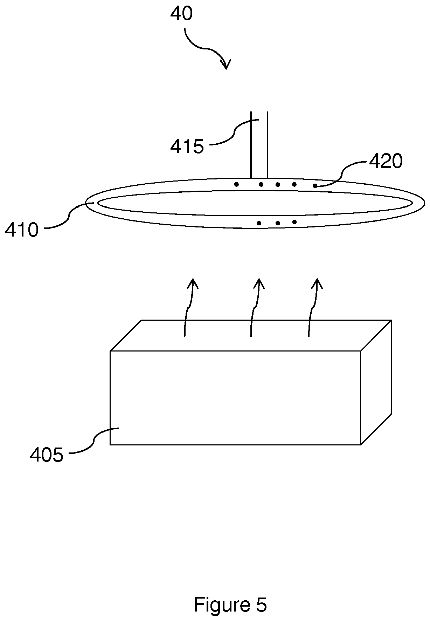

On observe, sur la figure 5, un mode de réalisation particulier adapté à une machine 405 industrielle ou commerciale libérant des composés organiques volatils. Ce dispositif 40 comporte un moyen 415 d'aspiration de vapeurs qui comporte un tuyau 410 creux configuré pour permettre le passage de vapeurs et muni d'ouvertures 420 d'aspiration surplombant la machine 405.

Le moyen 415 d'aspiration de vapeurs peut être, par exemple, une pompe aspirant des composés organiques volatils par le biais d'un tuyau 410 creux. Ce tuyau 410 creux peut être, par exemple, un soufflet. Ainsi, une fois le moyen 415 d'aspiration positionné, les vapeurs émanant de la machine 405 sont aspirées par les ouvertures 420 d'aspiration du tuyau 410 creux du moyen 415 d'aspiration de vapeurs.

Dans des variantes, le dispositif 40 est configuré pour aspirer des composés organiques volatils libérés au cours de l'aspiration de carburant d'un véhicule.

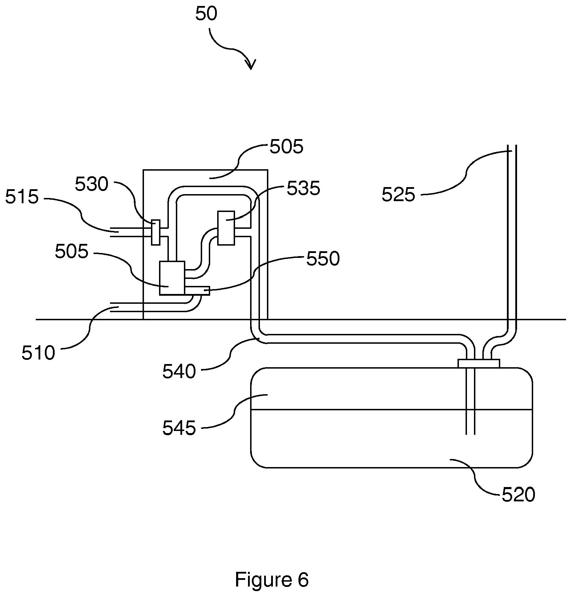

On observe, sur la figure 6, un mode de réalisation particulier 50 du dispositif objet de la présente invention. Ce dispositif 50 comporte :
- un moyen 505 d'aspiration de carburant et de vapeurs,
- une cuve 520 déportée et
- une évacuation aérienne 525 de vapeurs.

Le moyen 505 d'aspiration de carburants et de vapeurs comporte, dans ce mode de réalisation, depuis le tuyau flexible 510 et le tuyau d'aspiration de vapeurs 515, des moyens d'obturation, par exemple vannes ou clapets, respectivement 550 et 530, une pompe unique 525 et un débitmètre 535.

Le carburant et les vapeurs ainsi pompées sont transportés dans la cuve 520 par un tuyau 540. La surpression de gaz 545 au dessus du carburant présent dans la cuve 520 est relâchée dans l'atmosphère terrestre par l'évacuation aérienne 525 à distance de l'opérateur.

Dans des variantes, ce dispositif 50 comporte un moyen de récupération de carburant aspiré par un moyen d'aspiration de vapeurs. Ce moyen de récupération de carburant peut être, par exemple, un moyen de condensation des composés organiques volatils aspirés pour obtenir du carburant liquide.

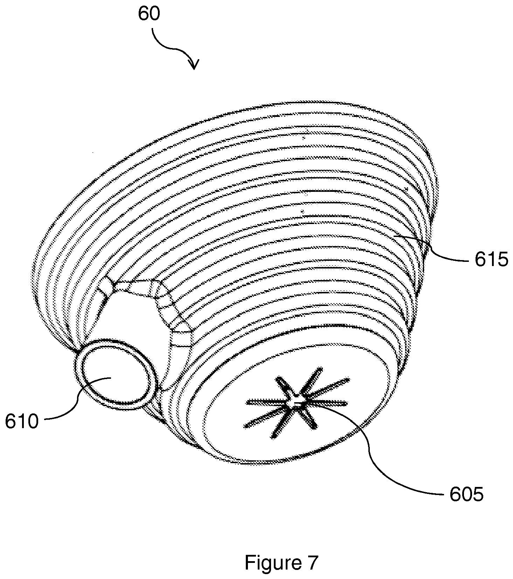

On observe, sur la figure 7, schématiquement et en perspective, un mode de réalisation particulier d'un moyen d'aspiration 60 tel qu'illustré en figure 4. Ce moyen d'aspiration 60 comporte une enveloppe 615 souple configurée pour être solidarisée avec une carrosserie d'un véhicule en regard d'une entrée de carburant du véhicule. L'enveloppe 615 est fixée, par exemple, par la mise en oeuvre d'une ventouse qui fixe l'enveloppe 615 à la carrosserie du véhicule. Ce moyen d'aspiration 60 comporte également une entrée 605 pour tuyau flexible, tel une ouverture dans l'enveloppe 615 par exemple. Les dimensions de cette ouverture permettent le passage du tuyau flexible et freinent le retrait du tuyau lorsque le tuyau est retiré. Par exemple, dans la figure 7, l'ouverture est en forme de cercle obstrué par au moins un triangle en matériau flexible dont les dimensions sont inférieure ou égale au rayon du cercle de manière à freiner le retrait du tuyau de l'entrée de carburant du véhicule.

Le moyen d'aspiration 60 comporte, de plus, une fixation 610 pour un tuyau d'aspiration. Cette fixation 610 est, par exemple, une ouverture filetée associée à un tuyau d'aspiration fileté en correspondance avec la fixation 610. Lorsque le tuyau flexible, inséré dans l'entrée de carburant du véhicule, alimente le véhicule en carburant, le tuyau d'aspiration aspire l'air situé entre l'entrée de carburant et l'enveloppe 615.

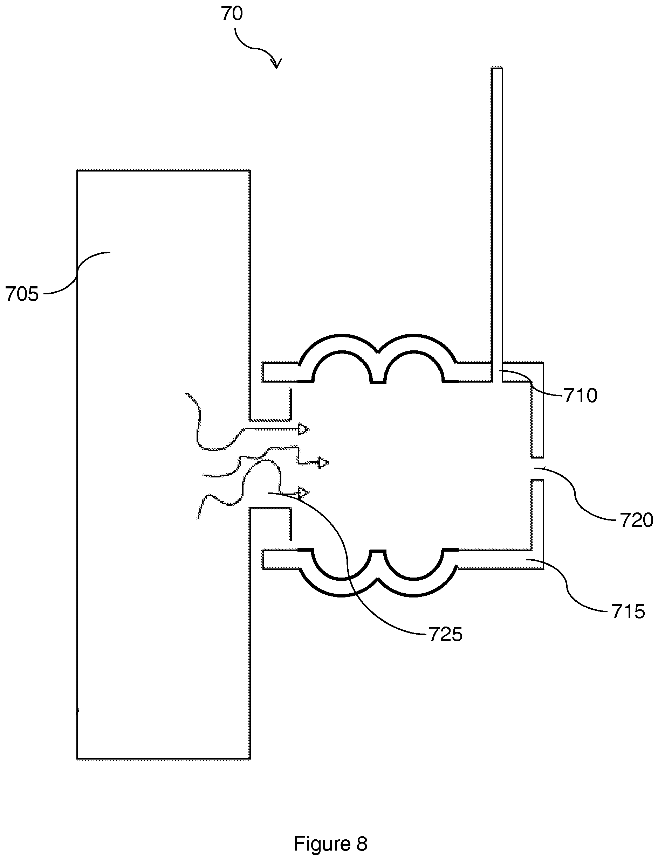

On observe, sur la figure 8, schématiquement et en coupe, un mode de réalisation particulier du dispositif 70. Ce dispositif 70 comporte un soufflet 715 en plastique souple configuré pour permettre une rotation et une compression selon tout axe. Ce soufflet 715 comporte une ouverture 720 pour tuyau d'alimentation de carburant. Ce tuyau d'alimentation de carburant alimente un réservoir 705 d'un véhicule, par exemple. Lors de l'alimentation de ce réservoir 705, des composés organiques volatils sont susceptibles de s'échapper du réservoir 705 par une ouverture 725 du réservoir. Le soufflet 715, lorsqu'il est mis en place, entoure cette ouverture 725 de manière à retenir les composés organiques volatils à l'intérieur du soufflet 715. Afin d'évacuer les composés organiques volatils retenus, le soufflet 715 comporte une ouverture 710 sur laquelle est fixée un tuyau d'aspiration d'air.

Ainsi, comme on le comprend, chacun des modes particuliers de réalisation du dispositif objet de la présente invention présenté en regard des figures 3, 4, 6 et 7 permet de limiter l'exposition de l'opérateur a des composés organiques volatiles.

En effet, la présence d'un moyen d'essuyage d'un tuyau flexible configuré pour aspirer le carburant d'un réservoir permet de limiter les émanations de composés organiques volatils provenant de carburant déposé sur la surface du tuyau flexible.

De plus, la présence d'une cloche de confinement et d'un moyen d'aspiration de vapeurs à proximité de l'ouverture du réservoir comportant du carburant permet d'éviter que les composés organiques volatils émanant par l'ouverture dudit réservoir entrent en contact avec une personne à proximité de ladite ouverture.

De surcroit, l'utilisation de bras télescopiques permet à la fois le maintien des moyens d'aspiration de carburant et de vapeurs et une manipulation à distance de ces moyens d'aspirations. Ainsi, une personne à proximité se trouve moins exposée à des éventuels composés organiques volatils en suspension.

Finalement, une cuve déportée et un moyen d'évacuation de vapeurs déporté permettent d'évacuer les composés organiques volatils aspirés de manière à ce qu'ils n'entrent pas en contact avec une personne à proximité de l'ouverture d'un réservoir comportant du carburant.

## Revendications

1. Dispositif (20) d'aspiration de carburant comportant un moyen (205) d'aspiration du carburant à travers une ouverture d'un réservoir (210) **caractérisé en ce qu'**il comporte, en outre :
- au moins un moyen (215) d'aspiration de vapeurs et
- un moyen (220) de positionnement d'au moins un moyen d'aspiration de vapeurs à proximité de l'ouverture dudit réservoir.

2. Dispositif (30) selon la revendication 1, dans lequel le moyen d'aspiration de vapeurs comporte une cloche (305) de confinement.

3. Dispositif (40) selon l'une des revendications 1 ou 2, dans lequel le moyen (415) d'aspiration de vapeurs comporte un tuyau (410) creux configuré pour permettre le passage de vapeurs et muni d'ouvertures (420) d'aspiration entourant au moins partiellement l'ouverture du réservoir (405).

4. Dispositif (30) selon l'une des revendications 1 à 3, dans lequel le moyen (310) de positionnement est un bras télescopique portant au moins un moyen d'aspiration de vapeurs.

5. Dispositif (50) selon l'une des revendications 1 à 4, qui comporte :
- une cuve (520) déportée d'au moins un moyen (505) d'aspiration configurée pour recevoir du carburant et des vapeurs par l'intermédiaire du moyen d'aspiration de vapeurs et
- un moyen (525) d'évacuation de vapeurs déporté de la cuve des vapeurs reçues.

6. Dispositif selon l'une des revendications 1 à 5, qui comporte au moins un moyen de récupération de carburant aspiré par un moyen d'aspiration de vapeurs.

7. Dispositif (10) selon l'une des revendications 1 à 6, dans lequel le tuyau (110) est un tuyau flexible creux et souple, qui comporte
- une gaine (115) externe enveloppant au moins une partie du tuyau flexible souple et
- entre la gaine externe et le tuyau flexible, un moyen (120) d'essuyage du tuyau flexible souple.

8. Dispositif (10) selon la revendication 7, dans lequel le moyen d'essuyage est un anneau souple.

9. Dispositif (10) selon l'une des revendications 7 ou 8, dans lequel la gaine externe est télescopique.

10. Dispositif selon l'une des revendications 7 à 9, qui comporte un bras télescopique portant la gaine externe.

11. Dispositif (10) d'aspiration de carburant selon l'une des revendications 1 à 10, dans lequel ledit moyen de positionnement d'au moins un moyen d'aspiration de vapeurs est situé autour de l'ouverture dudit réservoir, et qui comporte, de plus :
- un tuyau (110) flexible creux et souple configuré pour permettre le passage du carburant,
- une gaine (115) externe enveloppant au moins une partie du tuyau flexible souple et
- entre la gaine externe et le tuyau flexible, un moyen (120) d'essuyage du tuyau flexible souple.

12. Dispositif (10) selon la revendication 11, dans lequel le moyen d'essuyage est un anneau souple.

13. Dispositif selon l'une des revendications 11 ou 12, dans lequel la gaine externe est télescopique.

14. Dispositif selon l'une des revendications 11 à 13, qui comporte un bras télescopique portant la gaine externe.

15. Dispositif selon la revendication 14, dans lequel le déploiement du bras télescopique provoque la rétractation du tuyau flexible creux à l'intérieur de la gaine externe.

## Patentansprüche

1. Vorrichtung (20) zum Absaugen von Kraftstoff, ein Mittel (205) zum Absaugen des Kraftstoffes durch eine Öffnung eines Tanks (210) hindurch umfassend, **dadurch gekennzeichnet, dass** sie darüber hinaus Folgendes umfasst:
- zumindest ein Mittel (215) zum Absaugen von Dämpfen und
- ein Mittel (220) zum Positionieren zumindest eines Mittels zum Absaugen von Dämpfen nahe der Öffnung des besagten Tanks.

2. Vorrichtung (30) nach Anspruch 1, wobei das Mittel zum Absaugen eine Einschlussglocke (305) umfasst.

3. Vorrichtung (40) nach einem der Ansprüche 1 oder 2, wobei das Mittel (415) zum Absaugen von Dämpfen ein hohles Rohr (410) umfasst, das konfiguriert ist, um den Durchlass von Dämpfen zu ermöglichen, und mit Öffnungen (420) zum Absaugen versehen ist, welche zumindest teilweise die Öffnung des Tanks (405) umgeben.

4. Vorrichtung (30) nach einem der Ansprüche 1 bis 3, wobei das Mittel (310) zum Positionieren ein Teleskoparm ist, der zumindest ein Mittel zum Absaugen von Dämpfen trägt.

5. Vorrichtung (50) nach einem der Ansprüche 1 bis 4, Folgendes umfassend:
- einen ausgelagerten Behälter (520) zumindest eines Mittels (505) zum Absaugen, der konfiguriert ist, um Kraftstoff und Dämpfe über das Mittel zum Absaugen von Dämpfen zu empfangen, und
- ein Mittel (525) zum Evakuieren von Dämpfen, das vom Behälter für die empfangenen Dämpfe ausgelagert ist.

6. Vorrichtung nach einem der Ansprüche 1 bis 5, die zumindest ein Mittel zum Auffangen von Kraftstoff umfasst, der durch ein Mittel zum Absaugen von Dämpfen abgesaugt worden ist.

7. Vorrichtung (10) nach einem der Ansprüche 1 bis 6, wobei das Rohr (110) ein flexibles und biegsames hohles Rohr ist, das Folgendes umfasst
- eine externe Hülle (115), die zumindest einen Teil des flexiblen und biegsamen Rohres einhüllt, und
- zwischen der externen Hülle und dem flexiblen Rohr ein Mittel (120) zum Abwischen des flexiblen und biegsamen Rohres.

8. Vorrichtung (10) nach Anspruch 7, wobei das Mittel zum Abwischen ein biegsamer Ring ist.

9. Vorrichtung (10) nach einem der Ansprüche 7 oder 8, wobei die externe Hülle teleskopisch ist.

10. Vorrichtung nach einem der Ansprüche 7 bis 9, die einen Teleskoparm umfasst, der die externe Hülle trägt.

11. Vorrichtung (10) zum Absaugen von Kraftstoff nach einem der Ansprüche 1 bis 10, wobei sich das besagte Mittel zum Positionieren zumindest eines Mittels zum Absaugen von Dämpfen um die Öffnung des besagten Tanks herum befindet, und darüber hinaus Folgendes umfassend:
- ein flexibles hohles und biegsames Rohr (110), das konfiguriert ist, um den Durchlass von Kraftstoff zu ermöglichen,
- eine externe Hülle (115), die zumindest einen Teil des flexiblen und biegsamen Rohres einhüllt, und
- zwischen der externen Hülle und dem flexiblen Rohr ein Mittel (120) zum Abwischen des flexiblen biegsamen Rohres.

12. Vorrichtung (10) nach Anspruch 11, wobei das Mittel zum Abwischen ein biegsamer Ring ist.

13. Vorrichtung nach einem der Ansprüche 11 oder 12, wobei die externe Hülle teleskopisch ist.

14. Vorrichtung nach einem der Ansprüche 11 bis 13 die einen Teleskoparm umfasst, der die externe Hülle trägt.

15. Vorrichtung nach Anspruch 14, wobei das Ausfahren des Teleskoparms das Einziehen des flexiblen hohlen Rohres ins Innere der externen Hülle bewirkt.

## Claims

1. Fuel aspiration device (20) comprising a means (205) for aspirating fuel through an opening in a tank (210), **characterized in that** it further comprises:
- at least one means (215) for aspirating vapors; and
- a means (220) for positioning at least one means for aspirating vapors near the opening in said tank.

2. Device (30) according to claim 1, wherein the means for aspirating vapors comprises a confinement casing (305).

3. Device (40) according to one of claims 1 or 2, wherein the means (415) for aspirating vapors comprises a hollow tube (410) configured to allow the passage of vapors and equipped with aspiration openings (420) surrounding at least partially the opening in the tank (405).

4. Device (30) according to one of claims 1 to 3, wherein the positioning means (310) is a telescopic arm carrying at least one means for aspirating vapors.

5. Device (50) according to one of claims 1 to 4, that comprises:
- a remote container (520) for at least one aspiration means (505) configured to receive fuel and vapors from the means for aspirating vapors; and
- a remote means (525) for evacuating vapors from the container of received vapors.

6. Device according to one of claims 1 to 5,that comprises at least one means for recovering fuel aspirated by a means for aspirating vapors.

7. Device (10) according to one of claims 1 to 6, wherein the tube (110) is a hollow supple and flexible tube, that comprises
- an outer sleeve (115) enveloping at least one portion of the supple flexible tube; and
- between the outer sleeve and the flexible tube, a means (120) for wiping the supple flexible tube.

8. Device (10) according to claim 7, wherein the wiping means is a soft ring.

9. Device (10) according to one of claims 7 or 8, wherein the outer sleeve is telescopic.

10. Device according to one of claims 7 to 9, that comprises a telescopic arm carrying the outer sleeve.

11. Fuel aspiration device (10) according to one of claims 1 to 10, wherein said means for positioning at least one means for aspirating vapors is located around the opening in said tank, and that further comprises :
- a hollow supple and flexible tube (110) configured to allow the passage of the fuel;
- an outer sleeve (115) enveloping at least one portion of the supple flexible tube; and
- between the outer sleeve and the flexible tube, a means (120) for wiping the supple flexible tube.

12. Device (10) according to claim 11, wherein the wiping means is a soft ring.

13. Device according to one of claims 11 to 12, wherein the outer sleeve is telescopic.

14. Device according to one of claims 11 to 13, that comprises a telescopic arm carrying the outer sleeve.

15. Device according to claim 14, wherein deployment of the telescopic arm causes the hollow flexible tube to retract inside the outer sleeve.
